# EUROPÄISCHE PATENTSCHRIFT

(11) **EP 2 126 400 B1**
(45) Veröffentlichungstag und Bekanntmachung des Hinweises auf die Patenterteilung: **07.05.2014**
(21) Anmeldenummer: 07847488.9
(22) Anmeldetag: 29.11.2007
(51) Int. Cl.: F16D 65/14, F16D 55/226, B60T 8/172

(54) **SCHEIBENBREMSE**
DISK BRAKE
FREIN À DISQUE

(30) Priorität: 12.12.2006 DE 102006058750; 04.04.2007 DE 102007016250
(43) Veröffentlichungstag der Anmeldung: 02.12.2009
(73) Patentinhaber: Robert Bosch GmbH, 70442 Stuttgart (DE)
(72) Erfinder: BAUMANN, Dietmar, 71282 Hemmingen (DE); HOFMANN, Dirk, 70439 Stuttgart (DE)
(86) Internationale Anmeldenummer: PCT/EP2007/062971
(87) Internationale Veröffentlichungsnummer: WO 2008/071550

(56) Entgegenhaltungen:
- EP-A- 0 398 553
- US-A- 3 700 075
- US-A1- 2007 045 061

## Beschreibung

### Stand der Technik

Die Erfindung betrifft eine Scheibenbremse mit den Merkmalen des Oberbegriffs des Anspruchs 1.

Aus der Offenlegungsschrift DE 1 480 005 A1 ist eine Scheibenbremse mit einem Bremskolben und mit einem Reibbremsbelag, der zur Betätigung der Scheibenbremse mit dem Bremskolben gegen eine Bremsscheibe drückbar ist, bekannt. Der Bremskolben der bekannten Scheibenbremse wirkt quer zur Bremsscheibe. Der Reibbremsbelag ist quer und parallel zur Bremsscheibe verschiebbar, wobei mit parallel eine Verschiebung in einer Umfangs- oder einer Sekantenrichtung zur Bremsscheibe gemeint ist. Gegen eine Verschiebung parallel zur Bremsscheibe stützt sich der Reibbremsbelag der bekannten Scheibenbremse an einem Hilfskolben ab, der wie der Reibbremsbelag parallel zur Bremsscheibe verschiebbar ist. Der Hilfskolben kommuniziert mit dem Bremskolben.

Wird der Reibbremsbelag zur Betätigung der Scheibenbremse gegen die drehende Bremsscheibe gedrückt, übt die Bremsscheibe eine Reibungskraft in ihrer Drehrichtung auf den gegen sie gedrückten Reibbremsbelag aus. Der Reibbremsbelag verschiebt sich in der Drehrichtung der Bremsscheibe und stützt sich am Hilfskolben ab, der dadurch in eine Zylinderbohrung in einem Bremssattel verschoben wird und einen hydraulischen Druck erzeugt. Da der Hilfskolben mit dem Bremskolben kommuniziert, wird der hydraulische Druck auf den Bremskolben übertragen, der den Reibbremsbelag gegen die Bremsscheibe drückt. Bei statischer Betrachtung wirken am Hilfskolben und am Bremskolben der gleiche Druck, ein Verhältnis der Kolbenkräfte des Hilfskolbens und des Bremskolbens ist gleich dem umgekehrten Verhältnis der hydraulisch beaufschlagten Kolbenflächen. Der Hilfskolben und der mit ihm kommunizierende Bremskolben bilden eine hydraulische Selbstverstärkungseinrichtung, die die bei betätigter Scheibenbremse von der drehenden Bremsscheibe auf den gegen sie gedrückten Reibbremsbelag ausgeübte Reibungskraft als Hilfskraft nutzt, um den Reibbremsbelag gegen die Bremsscheibe zu drücken und dadurch eine Bremskraft der Scheibenbremse zu erhöhen.

Die Patentanmeldung US 2007/0045061 A1 offenbart eine Scheibenbremse mit ebenfalls einer hydraulischen Selbsfirerstärkung, die einen Hilfskolben aufweist, an dem sich ein Reibbremsbelag gegen Mitdrehen mit einer Bremsscheibe bei einer Bremsbetätigung abstützt. Der Hilfskolben kommuniziert mit einem Ringraum eines Bremskolbens, so dass sich eine Abstützkraft, mit der sich der Reibbremsbelag beim Bremsen am Hilfskolben abstützt, im Verhältnis der Kolbenfläche des Ringraums des Bremskolbens zur Kolbenfläche des Hilfskolbens auf den Bremskolben überträgt. Dem Hilfskolben und dem Ringraum des Bremskolbens ist ein Ventil zwischengeschaltet, durch das sich die Selbstverstärkung ausschalten lässt. Zur Betätigung weist die bekannte Bremse pedalbetätigten Hauptbremszylinder auf, der auf eine Kreisfläche des Bremskolbens wirkt, die sich innerhalb der Ringfläche befindet, mit der der Hilfskolben der Selbstverstärkungseinrichtung kommuniziert. Die Selbstverstärkungseinrichtung ist hydraulisch vom Hauptbremszylinder getrennt.

Die Patentanmeldung EP 0 398 553 A1 offenbart eine Scheibenbremse mit zwei Bremssätteln, die parallel zu einer Bremsscheibe gegeneinander beweglich sind. Zu einer Bremsbetätigung wird ein Bremskolben des beweglichen Bremssattels mit einem Hauptbremszylinder beaufschlagt. Der bewegliche Bremssattel bewegt sich bei der Bremsbetätigung gegenüber einem Hilfskolben, der sich am feststehenden Bremssattel abstützt. Der Hilfskolben kommuniziert mit einem zweiten Bremskolben im feststehenden Bremssattel, wodurch eine hydraulische Selbstverstärkungseinrichtung bewerkstelligt ist. Die hydraulische Selbstverstärkungseinrichtung ist hydraulisch vom Hauptbremszylinder getrennt.

Die Patentanmeldung US 3 700 075 offenbart eine Scheibenbremse mit einem Bremssattel, der um eine Drehachse einer Bremsscheibe drehbar ist. Der Bremssattel stützt sich an einem Hilfskolben ab, der über ein aufwendiges Servoventil rückgekoppelt ist, das Druckschwingungen dämpft und die Selbstverstärkung begrenzt

### Offenbarung der Erfindung

Die erfindungsgemäße Scheibenbremse mit den Merkmalen des Anspruchs 1 weist wie die bekannte Scheibenbremse eine hydraulischen Selbstverstärkungseinrichtung mit einem parallel zur Bremsscheibe verschiebbaren Hilfskolben auf, der mit einem Bremskolben kommuniziert. Beim Bremsen stützt sich der parallel zur Bremsscheibe verschiebbare Reibbremsbelag am Hilfskolben ab, der einen hydraulischen Druck erzeugt, mit dem er den Bremskolben beaufschlagt und dadurch eine Bremskraft der Scheibenbremse erhöht. Bei der erfindungsgemäßen Scheibenbremse ist dem Hilfskolben und dem Bremskolben ein Ventil zwischengeschaltet, bei dem es sich vorzugsweise um ein Proportionalventil handelt. Durch Schließen des Ventils wird der Bremskolben hydraulisch vom Hilfskolben getrennt, so dass die Scheibenbremse keine Selbstverstärkung aufweist. Mit dem dem Bremskolben und dem Hilfskolben zwischengeschalteten Ventil ist die Selbstverstärkung schaltbar bzw steuer- oder regelbar Mit der erfindungsgemäßen Scheibenbremse ist eine Bremsbetätigung ohne einen Aktuator oder den Anschluss an einen Hauptbremszylinder möglich. Der zur Bremsbetätigung erforderliche hydraulische Druck wird vom Hilfskolben erzeugt, der den mit ihm kommunizierenden Bremskolben beaufschlagt. Der Druck des Hilfskolbens wird durch die Reibungskraft erzeugt, die die drehende Bremsscheibe auf den gegen sie gedrückten Reibbremsbelag ausübt, der sich am Hilfskolben abstützt und dadurch die Reibungskraft auf den Hilfskolben überträgt. Die Höhe der Bremskraft wird mit dem Ventil gesteuert oder geregelt, das dem Bremskolben und dem Hilfskolben zwischengeschaltet ist. Eine zur Bremsbetätigung erforderliche Hilfskraft ist die von der drehenden Bremsscheibe auf den bei betätigter Scheibenbremse gegen sie gedrückten Reibbremsbelag ausgeübte Reibungskraft Die erfindungsgemäße Scheibenbremse ist somit als Hilfskraftbremse ausführbar. Ein Aktuator, Hauptbremszylinder oder eine Druckerzeugungseinrichtung mit beispielsweise einer Hydropumpe, die einen Bremsdruck mit Fremdenergie erzeugt, sind nicht zwingend erforderlich.

Der Bremskolben ist an einen Hauptbremszylinder einer hydraulischen Fahrzeugbremsanlage angeschlossen. Der Bremskolben bildet bei dieser Ausgestaltung der Erfindung den Aktuator der Schreibenbremse, die wie herkömmliche Scheibenbremsen hydraulisch an eine Fahrzeugbremsanlage angeschlossen ist. Ein separater Aktuator ist nicht erforderlich. Da die Scheibenbremse mit dem Hilfskolben eine hydraulische Selbstverstärkung aufweist, ist ein (Unterdruck)Bremskraftverstärker am Hauptbremszylinder oder an anderer Stelle der Fahrzeugbremsanlage nicht notwendig. Die Scheibenbremse ist weg- und nicht kraftverstärkend.

Der Hilfskolben stützt sich an einer Rückstellfeder ab, deren Federkraft in einer Größenordnung einer Kraft ist, mit der sich der Bremskolben bei betätigter Scheibenbremse am Hilfskolben abstützt. Die Rückstellfeder verkleinert die Selbstverstärkung bei zunehmender Bremskraft, weil eine Federkraft der Rückstellfeder den vom Hilfkolben erzeugten Hydraulikdruck verringert- Auf diese Weise wird eine Selbsthemmung der Scheibenbremse vermieden.

Die Erfindung ermöglicht eine hohe Selbstverstärkung und kann wie vorstehend erläutert bei Ausführungsformen als Hilfskraftbremse ausgebildet sein, die zu ihrer Betätigung die von der drehenden Bremsscheibe auf den Reibbremsbelag ausgeübte Reibungskraft als Hilfskraft nutzt und keine Muskel- oder Fremdkraft benötigt. Das schließt eine Nutzung von Muskel- oder Fremdkraft zur Betätigung der Scheibenbremse bei Ausführungsformen der Erfindung nicht aus. Die Selbstverstärkung kann so groß gewählt werden, dass die Scheibenbremse im selbsthemmenden Bereich oder zumindest in einem Teil eines Reibwertbereichs selbsthemmend arbeitet. Selbsthemmung bedeutet, dass die Selbstverstärkung so groß ist, dass die Spannkraft und die Bremskraft bis zum Blockieren der Bremsscheibe anwachsen würde, wenn das nicht konstruktiv oder in anderer Weise ausgeschlossen ist oder verhindert wird. Der Reibwert ist der Quotient aus der Reibungskraft zwischen der Bremsscheibe und dem gegen sie gedrückten Reibbremsbelag und der Spannkraft, mit der der Reibbremsbelag gegen die Bremsscheibe gedrückt wird. Er ist abhängig von Parametern wie Nässe, Verschmutzung, Temperatur und ändert sich im Betrieb. Durch die Möglichkeit, die erfindungsgemäße Scheibenbremse für den selbsthemmenden Bereich auszulegen, ist eine hohe Selbstverstärkung möglich, die wiederum eine kleine Betätigungsenergie zur Folge hat oder sogar eine Betätigung ohne äußere Energie möglich macht. Die Scheibenbremse benötigt keinen Hydraulikanschluss, d. h. es muss keine Hydraulikleitung zur Scheibenbremse gelegt werden. Als Back-Up kann die erfindungsgemäße Scheibenbremse ohne Weiteres an eine hydraulische Druckversorgung angeschlossen werden, um sie als Hilfsbremse bei Ausfall ihres Aktuators hydraulisch betätigen zu können.

Ein weiterer Vorteil der Erfindung ist, dass die Hydraulik komplett in oder an einem Bremssattel der Scheibenbremse untergebracht werden kann und keine Bremsschläuche benötigt. Ein Verlust von Bremsflüssigkeit und eine Aufnahme von Wasser durch Diffusion lässt sich dadurch vermeiden, das hydraulische System der Scheibenbremse kann geschlossen ausgeführt werden, wodurch ein Bremsflüssigkeitsverlust ausgeschlossen ist. Ein Bremsflüssigkeitswechsel ist nicht erforderlich.

Durch die Möglichkeit, die Höhe der Selbstverstärkung mittels des dem Hilfskolben und dem Bremskolben zwischengeschalteten Ventils zu beeinflussen, kann die Selbstverstärkung an den veränderlichen Reibwert angepasst werden, um die erforderliche Betätigungsenergie und damit die Beanspruchung eines Aktuators niedrig zu halten. Auch kann durch Schließen des Ventils die Spannkraft der Scheibenbremse ohne Wirkung des Aktuators konstant gehalten und der Aktuator dadurch entlastet werden.

Die Unteransprüche haben vorteilhafte Ausgestaltungen und Weiterbildungen der im Anspruch 1 angegebenen Erfindung zum Gegenstand.

Um eine Bremsung einleiten zu können, ist vorzugsweise eine Einrichtung, mit der der Reibbremsbelag an die Bremsscheibe anlegbar ist, vorgesehen, jedenfalls sofern die Scheibenbremse keinen Aktuator oder dgl. aufweist. Das ist Gegenstand des Anspruchs 2. Eine solche Einrichtung kann beispielsweise eine Hydropumpe (Anspruch 4), mit der der Brems- und/oder der Hilfskolben druck-beaufschlagbar ist, oder ein Hydrospeicher, der über ein Ventil mit dem Bremsund/oder dem Hilfskolben verbindbar ist, aufweisen.

Anspruch 3 sieht zur Betätigung der erfindungsgemäßen Scheibenbremse einen Aktuator vor, mit dem der Reibbremsbelag gegen die Bremsscheibe drückbar ist. Insbesondere ist ein elektromechanischer Aktuator vorgesehen, der beispielsweise ein Piezoelement aufweist. Auch ein elektromechanischer Aktuator mit einem Elektromagneten oder mit einem Elektromotor und einem Getriebe ist möglich. Des Weiteren ist auch eine mechanische, pneumatische, hydraulische oder sonstige Betätigung der erfindungsgemäßen Scheibenbremse möglich. Bei Vorhandensein des Aktuators ist eine andere Einrichtung, mit der der Reibbremsbelag an die Bremsscheibe anlegbar ist, entbehrlich. Durch die mögliche, hohe Selbstverstärkung oder sogar selbsthemmende Auslegung der Scheibenbremse genügt eine leistungsschwacher und damit leichter und kleinbauender Aktuator. Anspruch 6 sieht einen Hydrospeicher und ein Ventil vor, durch das der Hilfskolben oder der Bremskolben mit dem Hydrospeicher verbindbar ist. Das Ventil kann ein separates Ventil sein oder die Verbindung mit dem Hydrospeicher kann mit dem dem Hilfskolben und dem Bremskolben zwischengeschalteten Ventil erfolgen. Mit dem Ventil und dem Hydrospeicher ist eine Druckabsenkung zum Blockierschutz möglich.

### Kurze Beschreibung der Zeichnungen

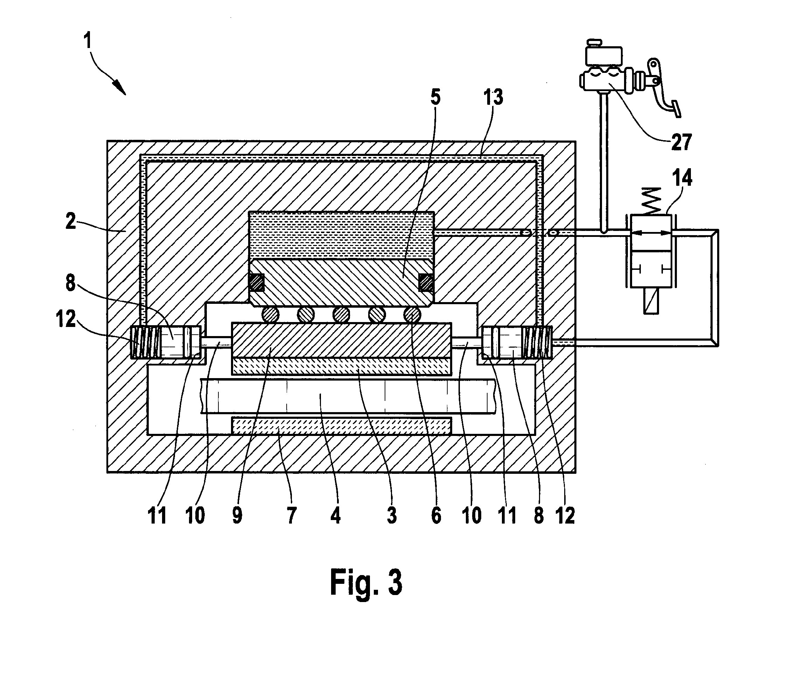

Die Erfindung wird nachfolgend anhand in der Zeichnung dargestellter Ausführungsbeispiele näher erläutert. Die fünf Figuren zeigen fünf Ausführungsformen von Scheibenbremsen in Schnittdarstellungen mit Blickrichtung radial von außen zu einer Bremsscheibe, wobei eine Schnittebene in einer Sekantenebene der Bremsscheibe liegt. Nur Figur 3 zeigt eine Ausführungsform der Erfindung, die anderen Figuren sind Beispiele, die das Verständnis der Erfindung erleichtern sollen. Die Zeichnungen sind als vereinfachte und schematisierte Darstellungen zum Verständnis und zur Erläuterung der Erfindung zu verstehen.

### Ausführungsformen der Erfindung

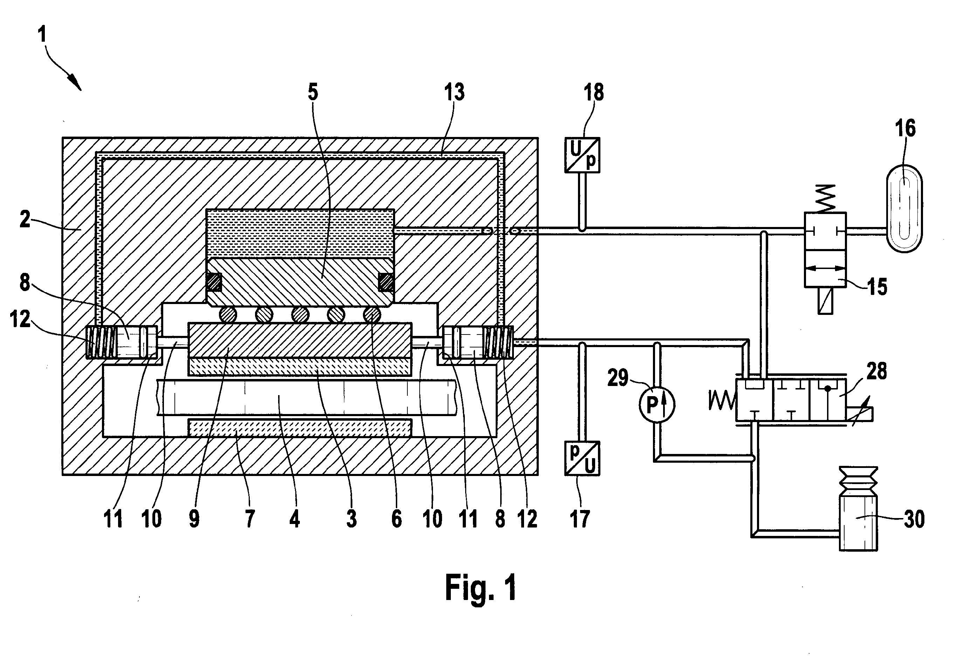

Das in Figur 1 dargestellte Beispiel einer Scheibenbremse 1 weist einen Bremssattel 2 auf, in dem ein Reibbremsbelag 3 auf einer Seite einer Bremsscheibe 4 angeordnet ist. Der Reibbremsbelag 3 ist mit einem Bremskolben 5 gegen die Bremsscheibe 4 drückbar. Der Reibbremsbelag 3 ist quer und parallel zur Bremsscheibe 4 im Bremssattel 2 beweglich, wobei mit parallel in einer Sekantenrichtung zur Bremsscheibe 4 gemeint ist. Zur Verschiebbarkeit parallel zur Bremsscheibe 4 ist der Reibbremsbelag 3 mit Rollen als Wälzkörper 6 wälzgelagert. Eine Gleitlagerung ist ebenfalls möglich (nicht dargestellt). Der Reibbremsbelag 3 wird nachfolgend auch als beweglicher Reibbremsbelag 3 bezeichnet werden. Auf einer anderen Seite der Bremsscheibe 4 ist ein Reibbremsbelag 7 unbeweglich im Bremssattel 2 angeordnet, er wird nachfolgend zur Unterscheidung vom beweglichen Reibbremsbelag 3 auch als fester Reibbremsbelag 7 bezeichnet werden. Der Bremssattel 2 ist als Schwimmsattel ausgebildet, d. h. er ist quer zur Bremsscheibe 4 verschiebbar geführt.

Auf der Seite des beweglichen Reibbremsbelags 3 sind zwei Hilfskolben 8 im Bremssattel 2 angeordnet, die in gleicher Richtung wie der bewegliche Reibbremsbelag 3, d. h. parallel und in einer Sekantenrichtung zur Bremsscheibe 4 verschiebbar sind. Es ist je ein Hilfskolben 8 in Umfangsrichtung der Bremsscheibe 4 gesehen an je einem Ende des Reibbremsbelags 3 angeordnet, der bewegliche Reibbremsbelag 3 stützt sich über eine Belagträgerplatte 9 und je einen Stößel 10 an den Hilfskolben 8 ab. Ein radial nach innen stehender Bund bildet einen Anschlag 11 für die Hilfskolben 8, der die Bewegung der Hilfskolben 8 in Richtung zum Reibbremsbelag 3 begrenzt. Jeweils eine Rückstellfeder 12 drückt die Hilfskolben 8 gegen die Anschläge 11. Die Federkraft der Rückstellfedern 12 ist vernachlässigbar klein, sie dient lediglich der Rückstellung der Hilfskolben 8.

Die Hilfskolben 8 bzw. ihre Zylinderbohrungen kommunizieren durch eine Bohrung oder Leitung 13 im Bremssattel 2 miteinander. Außerdem verbindet ein nachfolgend auch als Selbstverstärkungsventil 28 bezeichnetes Ventil die Hilfskolben 8 hydraulisch mit dem Bremskolben 5. Das Selbstverstärkungsventil 28 ist ein 3/3-Wege-Proportional-Magnetventil, das in seiner stromlosen Grundstellung die beiden Hilfskolben 8 mit dem Bremskolben 5 verbindet. Durch Schließen des Selbstverstärkungsventils 14 ist der Bremskolben 5 hydraulisch von den Hilfskolben 8 trennbar. In einer weiteren Schaltstellung verbindet das Selbstverstärkungsventil 28 den Bremskolben 5 und die Hilfskolben 8 mit einem drucklosen Hydrospeicher 30.

Dem Selbstverstärkungsventil 28 ist eine Hydropumpe 29 hydraulisch parallel geschaltet, mit der Bremsflüssigkeit aus dem Hydrospeicher 30 zu den Hilfskolben 8 förderbar ist.

Ein nachfolgend als Blockierschutzventil 15 bezeichnetes Ventil verbindet die Hilfskolben 8 mit einem Hydrospeicher 16 (Druckspeicher)Das Blockierschutzventil 15 ist ein 2/2-Wege-Magnetventil. Die beschriebene Hydraulik der Scheibenbremse 1 ist hermetisch abgeschlossen, die Scheibenbremse 1 weist keinen Hydraulikanschluss nach außen auf. Die Ventile 14, 15, deren Symbole in der Zeichnung neben dem Bremssattel 2 dargestellt sind, sind in der praktischen Ausführung der Erfindung in den Bremssattel 2 eingesetzt. Der Hydrospeicher 16 ist in den Bremssattel 2 integriert oder an ihm angebracht. Dadurch sind keine externen Bremsleitungen, insbesondere keine Schlauchleitungen, erforderlich, durch die Bremsflüssigkeit heraus diffundieren oder Wasser hinein diffundieren könnte.

An die Hilfskolben 8 ist ein Drucksensor 17 und an den Bremskolben 5 ein weiterer Drucksensor 18 angeschlossen.

Die Betätigung der Scheibenbremse 1 geschieht auf folgende Weise: Die drehende Bremsscheibe 4 übt eine Reibungskraft in ihrer Drehrichtung auf den gegen sie gedrückten oder an ihr anliegenden beweglichen Reibbremsbelag 3 aus, die den Reibbremsbelag 3 in der Drehrichtung der Bremsscheibe 4 verschiebt. Über einen der beiden Stößel 10 verschiebt der Reibbremsbelag 3 einen der beiden Hilfskolben 8 in dessen Zylinderbohrung. Der Hilfskolben 8 erzeugt einen hydraulischen Druck in der Bremsflüssigkeit, der durch das offene Selbstverstärkungsventil 14 auf den Bremskolben 5 übertragen wird. Der andere Hilfskolben 8 wird vom hydraulischen Druck gegen seinen Anschlag 11 gedrückt, er bewegt sich nicht. Der Bremskolben 5 übt eine Spannkraft auf den Reibbremsbelag 3 aus, die den beweglichen Reibbremsbelag 3 gegen die Bremsscheibe 4 drückt. Die Scheibenbremse 1 aus Figur 1 ist selbsthemmend ausgelegt, d. h. die Durchmesser der Hilfskolben 8 sind im Verhältnis zum Durchmesser des Bremskolbens 5 so gewählt, dass die von den Hilfskolben 8 bewirkte Spannkraft ansteigt. Die Spann- und damit die Bremskraft wird mit dem Selbstverstärkungsventil 28 geregelt. Zum Erhöhen der Bremskraft wird das Selbstverstärkungsventil 28 geöffnet, so dass der Bremskolben 5 hydraulisch mit den Hilfskolben 8 verbunden ist. Zum Konstanthalten der Bremskraft wird das Selbstverstärkungsventil 28 geschlossen und dadurch das Bremsflüssigkeitsvolumen des Bremskolbens 5 eingeschlossen. Zum Absenken der Bremskraft wird der Bremskolben 5 mit dem Selbstverstärkungsventil 28 hydraulisch mit dem drucklosen Hydrospeicher 30 verbunden, so dass der Bremsdruck sinkt. Die Scheibenbremse 1 aus Figur 1 ist eine sog. Hilfskraftbremse, die zu ihrer Betätigung keine Muskel- oder Fremdkraft benötigt, sondern ausschließlich die von der drehenden Bremsscheibe 4 auf den gegen sie gedrückten Reibbremsbelag 3 ausgeübte Reibungskraft als Hilfskraft zur Betätigung der Scheibenbremse 1 nutzt.

Durch das Drücken des beweglichen Reibbremsbelags 3 gegen die eine Seite der Bremsscheibe 4 wird der als Schwimmsattel ausgebildete Bremssattel 2 quer zur Bremsscheibe 4 verschoben und drückt den festen Reibbremsbelag 7 gegen die andere Seite der Bremsscheibe 4, die dadurch mit beiden Reibbremsbelägen 3, 7 gebremst wird.

Der bewegliche Reibbremsbelag 3 verschiebt jeweils nur den Hilfskolben 8, der in Drehrichtung der Bremsscheibe 4 gesehen hinter dem Reibbremsbelag 3 angeordnet ist. Der andere Hilfskolben 8 bewirkt die Selbstverstärkung der Scheibenbremse 1 bei umgekehrter Drehrichtung der Bremsscheibe 4. Er kann entfallen, wenn eine Selbstverstärkung nur für eine Drehrichtung der Bremsscheibe 4 gewünscht ist.

Das Blockierschutzventil 15 bleibt während der Betätigung der Scheibenbremse 1 geschlossen und der Hydrospeicher 16 dadurch hydraulisch von der Scheibenbremse 1 getrennt. Das Anlegen des Reibbremsbelags 3 an die Bremsscheibe 4 zur Betätigung der Scheibenbremse 1 bzw. zum Einleiten einer Bremsung erfolgt mit der Hydropumpe 29 oder durch Verbinden des Bremskolbens 5 mit dem Hydrospeicher 16 (Druckspeicher) durch Öffnen des Blockierschutzventils 15. Nach dem Einleiten der Bremsung wird wie bereits ausgeführt die Bremskraft mit dem Selbstverstärkungsventil 28 geregelt, die Hydropumpe 29 kann abgeschaltet und das Blockierschutzventil 15 geschlossen werden. Die Hydropumpe 29 mit dem drucklosen Hydrospeicher 30 und das Blockierschutzventil 15 mit dem Hydrospeicher 16 (Druckspeicher) bilden jeweils eigene Einrichtungen 29, 30; 15, 16 zum Anlegen des Reibbremsbelags 3 an die Bremsscheibe 4 und damit zum Einleiten einer Bremsung. Sofern keine Redundanz verlangt ist, genügt entweder die Hydropumpe 29 mit dem Hydrospeicher 30 oder das Blockierschutzventil 15 mit dem Hydrospeicher 16 als Einrichtung zum Anlegen des Reibbremsbelags 3 an die Bremsscheibe 4.

Um den Hydrospeicher 16 (Druckspeicher) mit Druck zu beaufschlagen wird während einer Bremsung das Blockierschutzventil 15 geöffnet.

Mit der Hydropumpe 29 kann während einer Bremsung Bremsflüssigkeit aus dem drucklosen Hydrospeicher 30 zum Hilfskolben 8 gefördert werden. Dadurch wird der Hilfskolben 8 und mit ihm die Belagträgerplatte 9 mit dem Reibbremsbelag 3 in Richtung ihrer Ausgangsposition zurückbewegt werden. Das Selbstverstärkungsventil 29 ist dabei geschlossen, d. h. der Bremskolben 5 hydraulisch von den Hilfskolben 8 getrennt.

Das Selbstverstärkungsventil 28 kann durch eine Ventilanordnung mit beispielsweise zwei 2-Wegventilen ersetzt sein (nicht dargestellt). Insbesondere in Figur 1 kann das Selbstverstärkungsventil 28 auch als Bremskraftsteuer-, -regel- oder - begrenzungsventil aufgefasst werden.

Mit den Drucksensoren 17, 18 ist eine Ermittlung des Reibwerts µ zwischen der Bremsscheibe 4 und dem beweglichen Reibbremsbelag 3 möglich: Zur Messung wird bei betätigter Scheibenbremse 1 und geschlossenem Blockierschutzventil 15 das Selbstverstärkungsventil 14 (kurzzeitig) geschlossen und es werden der hydraulische Druck der Hilfskolben 8 und des Bremskolbens 5 mit den Drucksensoren 17, 18 gemessen. Das Druckverhältnis multipliziert mit den Verhältnissen der Kolbenflächen des Bremskolbens 5 und der Hilfskolben 8 ergibt den Reibwert µ. Zu einer Bremsdruckregelung mit dem Selbstverstärkungsventil 28 kann der mit dem Sensor 18 gemessene Bremsdruck des Bremskolbens 5 als zu regelnder Größe gemessen werden. Zur Bremskraftregelung wird zusätzlich der Reibwert µ in vorstehend erläuterter Weise ermittelt.

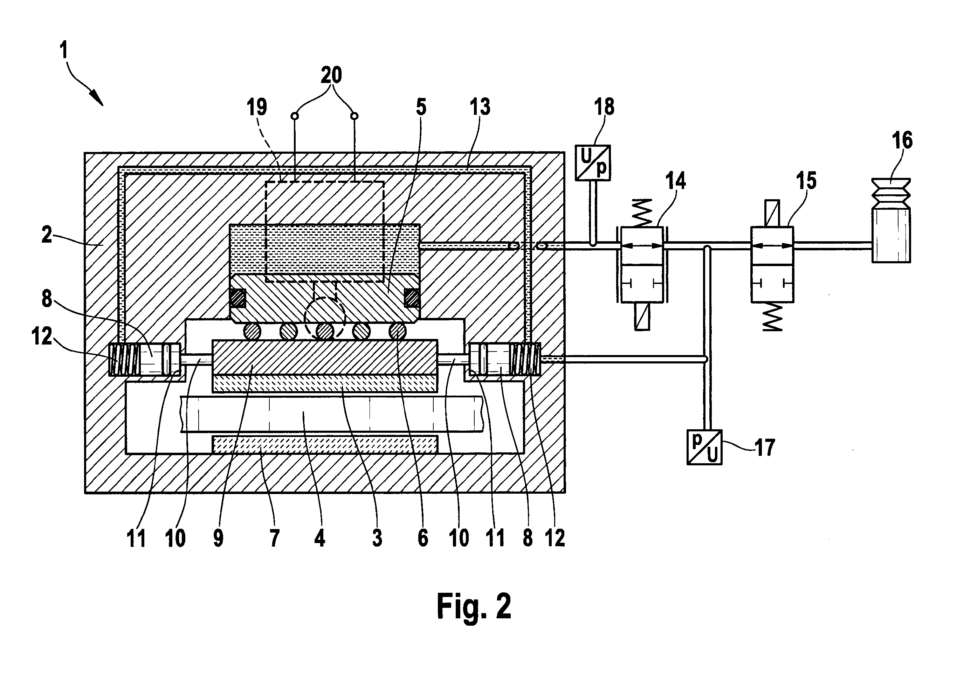

Bei der nachfolgenden Erläuterung der Figur 2 werden im Wesentlichen die Unterschiede zu Figur 1 dargestellt und es werden ergänzend die Ausführungen zu Figur 1 in Bezug genommen. Für mit Figur 1 übereinstimmende Bauteile werden in Figur 2 gleiche Bezugszeichen verwendet.

Im Unterschied zu Figur 1 weist die Scheibenbremse 1 aus Figur 2 einen elektromechanischen Aktuator 19 zu ihrer Betätigung auf, mit dem der bewegliche Reibbremsbelag 3 gegen die Bremsscheibe 4 drückbar ist. Bei dem dargestellten Beispiel einer Scheibenbremse ist ein Piezoelement als Aktuator 19 vorgesehen. Es sind allerdings auch andere elektromechanische, beispielsweise einen Elektromagneten oder einen Elektromotor und ein Getriebe aufweisende Aktuatoren oder nicht-elektromechanische, beispielsweise mechanische, pneumatische oder hydraulische Aktuatoren zur Betätigung der Scheibenbremse 1 verwendbar (nicht dargestellt). Außer den Stromanschlüssen 20 des Aktuators und nicht dargestellten elektrischen Steuerleitungen für die Ventile 14, 15 und Messleitungen für die Drucksensoren 17, 18 benötigt die Scheibenbremse 1 keine Anschlüsse, insbesondere ist kein hydraulischer Anschluss an beispielsweise einen Hauptbremszylinder oder eine hydraulische Fremdenergieversorgung vorgesehen. Allerdings ist ein Hydraulikanschluss des Bremskolbens 5 möglich, wenn die Scheibenbremse 1 bei Ausfall ihres Aktuators 19 als Hilfsbremse hydraulisch betätigbar sein soll (nicht dargestellt).

Anstelle des 3/3-Wege-Proportional-Magnetventils weist die Scheibenbremse 1 aus Figur 2 eine 2/2-Wege-Proportional-Magnetventil als Selbstverstärkungsventil auf, das dem Bremskolben 5 und den Hilfskolben 8 zwischengeschaltet ist und mit dem der Bremskolben 5 mit den Hilfskolben 8 hydraulisch verbindbar oder von ihnen trennbar ist. Vorhanden ist das Blockierschutzventil 15 mit dem Hydrospeicher 16, der allerdings im Unterschied zu Figur 1 in Figur 2 ein Metallfaltenbalgspeicher, also ein druckloser Speicher ist, in dem in etwa Umgebungsdruck herrscht. In Figur 2 fehlen die Hydropumpe 28 mit dem drucklosen Speicher 30.

Die Scheibenbremse 1 aus Figur 2 weist eine hydraulische Selbstverstärkung auf, die die Hilfskolben 8, den Bremskolben 5 und das Selbstverstärkungsventil 14 umfasst und die eine Bremskraft der Scheibenbremse 1 erhöht. Zur Selbstverstärkung wird die von der drehenden Bremsscheibe 4 auf den gegen sie gedrückten beweglichen Reibbremsbelag 3 ausgeübte Reibungskraft als Hilfskraft zur Verstärkung der Bremskraft genutzt. Die Höhe der Selbstverstärkung ist abhängig vom Verhältnis der Kolbenflächen der Hilfskolben 8 zur Kolbenfläche des Bremskolbens 5.

Durch Schließen des Selbstverstärkungsventils 14 lässt sich der Bremskolben 5 hydraulisch von den Hilfskolben 8 trennen und die Selbstverstärkung begrenzen bzw. ausschalten, durch teilweises Schließen des als Proportionalventil ausgebildeten Selbstverstärkungsventils 14 oder eine modulierte Ventilsteuerung lässt sich die Höhe der Selbstverstärkung beeinflussen, steuern oder regeln. Das ermöglicht eine Auslegung der Scheibenbremse 1 für einen selbsthemmenden Betrieb durch entsprechende Wahl des Verhältnisses der Kolbendurchmesser der Hilfskolben 8 zum Kolbendurchmesser des Bremskolbens 5. Selbsthemmend bedeutet, dass die Selbstverstärkung so hoch ist, dass die Bremskraft der Scheibenbremse 1 bis zu einem Blockieren der Bremsscheibe 4 steigen würde, wenn die Bremskraft nicht in geeigneter Weise begrenzt wird. Die Begrenzung der Bremskraft erfolgt wie bereits gesagt durch Schließen des Selbstverstärkungsventils 14. Die Auslegung der Scheibenbremse 1 kann auch so erfolgen, dass ungefähr ab einem mittleren Reibwert µ die Grenze zur Selbsthemmung überschritten wird. Durch die Begrenzung oder Steuerung der Höhe der Selbstverstärkung und die dadurch mögliche Auslegung der Scheibenbremse 1 für den selbsthemmenden Bereich ist die Verwendung eines leistungsschwachen Aktuators 19 möglich.

Um ein Blockieren der Bremsscheibe 4 zuverlässig zu verhindern, ist das Blockierschutzventil 15 vorgesehen, das zur Betätigung der Scheibenbremse 1 geschlossen wird. Durch Öffnen des Blockierschutzventils 15 werden die Hilfskolben 8 hydraulisch mit dem Hydrospeicher 16 verbunden. Wird zugleich auch das Selbstverstärkungsventil 14 geöffnet, wird auch der Bremskolben 5 hydraulisch mit dem Hydrospeicher 16 verbunden. Der auf die Hilfskolben 8 und den Bremskolben 5 wirkende hydraulische Druck lässt sich dadurch bis auf den Druck im Hydrospeicher 16, also bis auf ungefähr Umgebungsdruck absenken. Wird auch der Aktuator 19 ausgeschaltet, ist die Scheibenbremse 1 unbetätigt und löst sich. Das Blockierschutzventil 15 kann geschlossen werden, sobald die Bremsscheibe 4 wieder zu drehen beginnt.

Durch Schließen des Selbstverstärkungsventils 14 wird die Bremsflüssigkeit in der Zylinderbohrung des Bremskolbens 5 eingeschlossen. Auf diese Weise lässt sich eine Spannkraft der betätigten Scheibenbremse 1 konstant halten, ohne den Aktuator 19 bestromen zu müssen.

Bei der nachfolgenden Erläuterung der Figur 3 werden im Wesentlichen die Unterschiede zu Figur 2 dargestellt und es werden ergänzend die Ausführungen zu Figur 2 in Bezug genommen. Für mit Figur 2 übereinstimmende Bauteile werden in Figur 3 gleiche Bezugszeichen verwendet.

Die in Figur 3 dargestellte Scheibenbremse 1 gemäß der Erfindung weist übereinstimmend mit Figur 2 einen als Schwimmsattel ausgebildeten Bremssattel 2 auf, in dem ein beweglicher Reibbremsbelag 3 auf einer Seite einer Bremsscheibe 4 und ein fester Reibbremsbelag 7 auf der anderen Seite der Bremsscheibe 4 angeordnet sind. Des Weiteren ist der Bremskolben 5 vorhanden, mit dem der bewegliche Reibbremsbelag 3 gegen die eine Seite der Bremsscheibe 4 drückbar ist und es sind die beiden Hilfskolben 8 vorhanden, die durch das Selbstverstärkungsventil 14 mit dem Bremskolben 5 kommunizieren und die durch Schließen des Selbstverstärkungsventils 14 hydraulisch vom Bremskolben 5 trennbar sind. Das Selbstverstärkungsventil 14 ist vorzugsweise wie in Figur 2 als Proportionalventil ausgeführt. Nicht vorgesehen wenngleich trotzdem möglich sind bei der in Figur 3 dargestellten Scheibenbremse 1 das Blockierschutzventil 15 und der Hydrospeicher 16. Die Drucksensoren 17, 18 können, müssen allerdings nicht vorhanden sein, in Figur 3 sind sie nicht dargestellt.

Die in Figur 3 dargestellte Scheibenbremse 1 ist an einen Hauptbremszylinder 27 einer im übrigen nicht dargestellten, an sich bekannten hydraulischen Fahrzeugbremsanlage angeschlossen. Insbesondere ist die Scheibenbremse 1 als Radbremse an eine hydraulische Fahrzeugbremsanlage angeschlossen, die eine Blockierschutz-, Antriebsschlupf- und/oder Fahrdynamik- bzw. Schleuderschutzregelung aufweist (ABS, ASR, FDR, bzw. ESP). Durch Betätigung des Hauptbremszylinders 27 wird der Bremskolben 5 der Scheibenbremse 1 hydraulisch mit Druck beaufschlagt und drückt den beweglichen Reibbremsbelag 3 gegen die Bremsscheibe 4, d. h. die Scheibenbremse 1 wird durch Betätigung des Hauptbremszylinders 27 betätigt. Der Bremskolben 5 bildet einen hydraulischen Aktuator der Scheibenbremse 1, so dass ein separater Aktuator entfallen kann (nicht muss!). Der elektromechanische Aktuator 19 aus Figur 2 ist deswegen in Figur 3 nicht dargestellt.

Da bei der Scheibenbremse 1 aus Figur 3 der Bremskolben 5 mit dem Hauptbremszylinder 27 kommuniziert, wird der Bremskolben 5 mit dem im Hauptbremszylinder 27 erzeugten hydraulischen Druck beaufschlagt. Die Spannkraft, mit der der Bremskolben 5 den beweglichen Reibbremsbelag 3 gegen die Bremsscheibe 4 drückt ist einer Betätigungskraft, mit der der Hauptbremszylinder 27 betätigt wird proportional. Die Scheibenbremse 1 aus Figur 3 ist demzufolge wegverstärkend und nicht wie die Scheibenbremse 1 aus Figur 2 kraftverstärkend. Wird die Scheibenbremse 1 aus Figur 3 betätigt, verschiebt die drehende Bremsscheibe 4 den gegen sie gedrückten beweglichen Reibbremsbelag 3 in der Drehrichtung. Sie verschiebt über einen der beiden Stößel 10 den in Drehrichtung der Bremsscheibe 4 angeordneten Hilfskolben 8, der Bremsflüssigkeit durch das offene Selbstverstärkungsventil 14 in eine Zylinderbohrung des Bremskolbens 5 verdrängt. Die vom Hilfskolben 8 verdrängte Bremsflüssigkeit verschiebt den Bremskolben 5 zur Bremsscheibe 4 und verringert das zur Betätigung der Scheibenbremse 1 vom Hauptbremszylinder 27 zu liefernde Bremsflüssigkeitsvolumen. Ein Betätigungsweg des Hauptbremszylinders 27 verkürzt sich demzufolge. Durch Wahl eines Hauptbremszylinders mit kleinerem Kolbendurchmesser oder einen größeren Durchmesser des Bremskolbens 5 kann wegen der hydraulischen Wegverstärkung der Scheibenbremse 1 aus Figur 3 eine größere hydraulische Kraftübersetzung vom Hauptbremszylinder 27 zum Bremskolben 5 gewählt werden. Infolgedessen ist die Verwendung eines Hauptbremszylinders 27 ohne Bremskraftverstärker möglich. Die die Hilfskolben 8 und den Bremskolben 5 umfassende hydraulische Selbstverstärkungseinrichtung der Scheibenbremse 1 aus Figur 3 ist wie dargelegt wegverstärkend. Die bei betätigter Scheibenbremse 1 von der drehenden Bremsscheibe 4 auf den gegen sie gedrückten beweglichen Reibbremsbelag 3 ausgeübte Reibungskraft wird als Hilfskraft für die Selbstverstärkung genutzt.

Da die Scheibenbremse1 wie üblich hydraulisch an den Hauptbremszylinder 27 angeschlossen ist, ist ein Pedalkraftgefühl eines Fahrzeugführers bei Betätigung der Scheibenbremse 1 so wie er es gewohnt ist. Mit dem Selbstverstärkungsventil 14 ist eine Betätigungskraft-/Wegkennlinie bei schwankendem Reibwert µ an einem gewünschten Kennlinienverlauf anpassbar.

Die Kraft der Kolbenrückstellfedern 12 der Hilfskolben 8 ist bei der Scheibenbremse 1 aus Figur 3 nicht vernachlässigbar, sondern die Federkraft der Kolbenrückstellfedern 12 liegt in der Größenordnung der Bremskraft der Scheibenbremse, die so groß ist wie die bei betätigter Scheibenbremse 1 von der drehenden Bremsscheibe 4 auf den gegen sie gedrückten Reibbremsbelag 3 ausgeübte Reibungskraft. Die Federkraft der voll ausgelenkten Rückstellfedern 12 ist beispielsweise so groß oder liegt jedenfalls in der Größenordnung der maximalen Bremskraft oder zumindest in der Größenordnung einer mittleren Bremskraft der Scheibenbremse 1. Die Rückstellfedern 12 verhindern durch diese Auslegung ein Selbsthemmen der Scheibenbremse 1, d. h. ein Blockieren der Bremsscheibe 4. Die Federkraft der Rückstellfedern 12 wirkt der Kraft, mit der sich der bewegliche Reibbremsbelag 3 am Hilfskolben 8 abstützt, entgegen. Effektiv wirkt der Hilfskolben 8 deswegen mit der Differenzkraft zwischen der Reibungskraft, die die drehende Bremsscheibe 4 auf den gegen sie gedrückten beweglichen Reibbremsbelag 3 ausübt, und der Federkraft der Rückstellfeder 12 auf die Hydraulikflüssigkeit. Da sich die Federkraft der Rückstellfeder 12 mit deren zunehmender Auslenkung vergrößert, verringert sie den vom Hilfskolben 8 erzeugten Hydraulikdruck. Die Selbstverstärkung der Scheibenbremse 1 aus Figur 3 verringert sich deswegen mit zunehmender Verschiebung des Hilfskolbens 8 wodurch die Selbsthemmung verhindert wird.

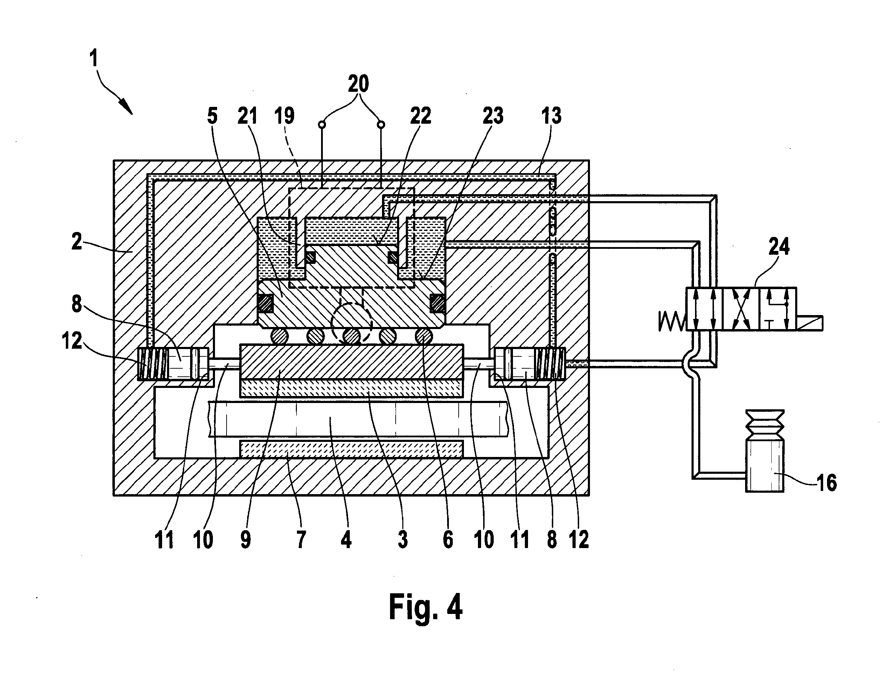

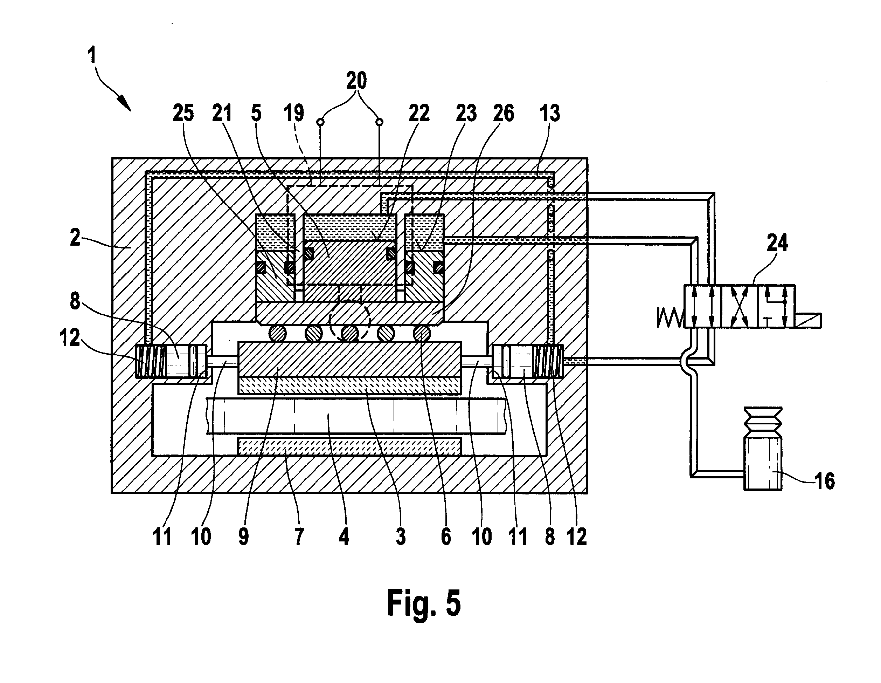

Bei der nachfolgenden Erläuterung der Figuren 4 und 5 werden im Wesentlichen die Unterschiede zu Figur 2 dargestellt und es werden ergänzend die Ausführungen zu Figur 2 in Bezug genommen. Für mit Figur 2 übereinstimmende Bauteile werden in Figuren 4 und 5 gleiche Bezugszeichen verwendet.

Der Bremskolben 5 des in Figur 4 dargestellten Beispiels einer Scheibenbremse 1 ist ein Stufenkolben, der außer in die Zylinderbohrung im Bremssattel 2 in einen rohrförmigen Kragen 21 eintaucht, der konzentrisch in der Zylinderbohrung im Bremssattel 2 ausgebildet ist. Der Bremskolben 5 weist dadurch zwei hydraulisch getrennt voneinander beaufschlagbare Kolbenflächen 22, 23 auf, nämlich eine Kreisfläche 22 und eine die Kreisfläche 22 konzentrisch umgebende, axial versetzte Kreisringfläche 23. Die Kolbenflächen 22, 23 sind verschieden groß, im dargestellten Beispiel ist die Kreisringfläche 23 größer als die Kreisfläche 22, das kann allerdings auch umgekehrt gewählt werden.

Anstelle des Selbstverstärkungsventils 14 und des Blockierschutzventils 15 weist die Scheibenbremse 1 aus Figur 4 ein 4/3-Wege-Magnetventil 24 auf, mit dem wahlweise die Kreisfläche 22, die Kreisringfläche 23 oder die Kreisfläche 22 und die Kreisringfläche 23 mit den Hilfskolben 8 verbindbar sind. Denkbar, allerdings nicht dargestellt, ist eine weitere Stellung des Ventils 24, in der eine oder beide Kolbenflächen 22, 23 des als Stufenkolben ausgebildeten Bremskolbens 5 hydraulisch gesperrt, d. h. die Bremsflüssigkeitsvolumina mit konstantem Volumen eingesperrt sind. Dadurch lässt sich der Bremskolben 5 feststellen und eine Spannkraft des Reibbremsbelags 3 gegen die Bremsscheibe 4 bei unbestromtem Aktuator 19 aufrecht erhalten. Die Kolbenfläche 22, 23 des Bremskolbens 5, die nicht mit dem Hilfskolben 8 verbunden ist, wird durch das Ventil 24 mit dem Hydrospeicher 16 verbunden. Sind beide Kolbenflächen 22, 23 mit den Hilfskolben 8 verbunden, trennt das Ventil 24 den Hydrospeicher 16 vom hydraulischen System der Scheibenbremse 1.

Im Übrigen ist die in Figur 4 dargestellte Scheibenbremse 1 gleich ausgebildet wie die Scheibenbremse 1 aus Figur 2 und funktioniert prinzipiell in gleicher Weise. Ebenso wie die Scheibenbremse 1 aus Figur 2 weist auch die Scheibenbremse 1 aus Figur 4 die durch die Verbindungsleitung 13 mit einander kommunizierenden Hilfskolben 8 auf, die durch das Ventil 24 mit den Kolbenflächen 22, 23 des Bremskolbens 5 verbindbar sind und die zusammen mit dem Bremskolben 5 die hydraulische Selbstverstärkungseinrichtung der Scheibenbremse 1 bilden. Besonderheit der Scheibenbremse 1 aus Figur 4 ist, dass durch das Ventil 24 wahlweise eine oder beide der Kolbenflächen 22, 23 hydraulisch mit den Hilfskolben 8 verbindbar sind. Dadurch lässt sich die Höhe der Selbstverstärkung der Scheibenbremse 1 stufenweise einstellen: Sind die Hilfskolben 8 mit der Kreisfläche 22 des als Stufenkolben ausgebildeten Bremskolbens 5 verbunden, weist die Scheibenbremse 1 eine kleine Selbstverstärkung auf. Sind die Hilfskolben 8 mit der Kreisringfläche 23 des Bremskolbens 5 verbunden, die größer als die Kreisfläche 22 ist, weist die Scheibenbremse 1 eine mittlere Selbstverstärkung auf. Sind beide Kolbenflächen 22, 23 mit den Hilfskolben 8 verbunden, weist die Scheibenbremse 1 eine große Selbstverstärkung auf. Dadurch lässt sich die Selbstverstärkung der Scheibenbremse 1 aus Figur 4 in Stufen an einen hohen, einen mittleren und einen niedrigen Reibwert µ zwischen dem Reibbremsbelag 3 und der Bremsscheibe 4 anpassen und die Scheibenbremse 1 stets nahe einer Grenze am Übergang vom selbsthemmungsfreien zum selbsthemmenden Bereich betreiben, wodurch eine vom Aktuator 19 aufzubringende Spannkraft und Betätigungsenergie klein sind. Auch bei der Scheibenbremse 1 aus Figur 4 ist es möglich, wenn auch nicht dargestellt, beide Kolbenflächen 22, 23 des Bremskotbens 5 mit dem Hydrospeicher 16 zu verbinden, dadurch die Selbstverstärkung auszuschalten und ein Blockieren der Bremsscheibe 4 zu verhindern. Das Verbinden der beiden Kolbenflächen 22, 23 mit dem Hydrospeicher 16 kann wie in Figur 2 mit einem separaten Blockierschutzventil oder durch eine weitere Schaltstellung des Ventils 24 bewerkstelligt werden.

Die Scheibenbremse 1 aus Figur 5 entspricht an sich der Scheibenbremse 1 aus Figur 4, allerdings ist in Figur 5 die in Stufen einstellbare Höhe der Selbstverstärkung nicht mit einem Stufenkolben, sondern mit zwei Bremskolben 5, 25 erreicht. Ein Bremskolben 25 ist ein Ringkolben, der den anderen Bremskolben 5 umschließt. Ein rohrförmiger Kragen 21 des Bremssattels 2 trennt die beiden Bremskolben 5, 25 voneinander. Anstelle zweier konzentrisch angeordneter Bremskolben 5, 25 können beispielsweise auch zwei nebeneinander im Bremssattel 2 angeordnete Bremskolben vorgesehen sein (nicht dargestellt). Eine die beiden Bremskolben 5, 25 an ihren dem Reibbremsbelag 3 und der Bremsscheibe 4 zugewandten Vorderseiten überdeckende Druckverteilungsplatte 26 überträgt eine von den Bremskolben 5, 25 aufgebrachte Spannkraft auf den beweglichen Reibbremsbelag 3.

Die beiden Bremskolben 5, 25 weisen verschieden große Kolbenflächen auf, sie sind wie die Kolbenflächen 22, 23 des als Stufenkolben ausgebildeten Bremskolbens 5 der Scheibenbremse 1 aus Figur 4 wahlweise einzeln oder beide mit dem 4/3-Wege-Magnetventil 24 hydraulisch mit den Hilfskolben 8 verbindbar. Durch Verbinden des Bremskolbens 5 mit der kleineren Kolbenfläche mit den Hilfskolben 8 weist die Scheibenbremse 1 aus Figur 5 eine niedrige Selbstverstärkung, durch Verbinden des Bremskolbens 25 mit der größeren Kolbenfläche mit den Hilfskolben 8 eine mittlere Selbstverstärkung und durch Verbinden beider Bremskolben 5, 25 mit den Hilfskolben 8 eine große Selbstverstärkung auf.

## Patentansprüche

1. Scheibenbremse, mit einem Reibbremsbelag (3) und mit einem Bremskolben (5), mit dem der Reibbremsbelag (3) gegen eine Bremsscheibe (4) drückbar ist, wobei der Reibbremsbelag (3) quer und parallel zur Bremsscheibe (4) verschiebbar ist und sich in Umfangsrichtung an einem Hilfskolben (8) abstützt, der parallel zur Bremsscheibe (4) verschiebbar ist und der mit dem Bremskolben (5) kommuniziert, wobei dem Hilfskolben (8) und dem Bremskolben (5) ein Ventil (14; 24; 28) zwischengeschaltet ist, **dadurch gekennzeichnet, dass** der Bremskolben (5) an einen Hauptbremszylinder (27) angeschlossen ist und dass der Hilfskolben (8) eine Rückstellfeder (12) aufweist, deren Federkraft in einer Größenordnung einer Kraft ist, mit der sich der Reibbremsbelag (3) bei betätigter Scheibenbremse (1) am Hilfskolben (8) abstützt.

2. Scheibenbremse nach Anspruch 1, **dadurch gekennzeichnet, dass** die Scheibenbremse (1) eine Einrichtung (15, 16; 29, 30) aufweist, mit der der Reibbremsbelag (3) zur Betätigung der Scheibenbremse (1) an die Bremsscheibe (4) anlegbar ist.

3. Scheibenbremse nach Anspruch 1, **dadurch gekennzeichnet, dass** die Scheibenbremse (1) einen Aktuator (19) aufweist, mit dem der Reibbremsbelag (3) zur Betätigung der Scheibenbremse (1) gegen die Bremsscheibe (4) drückbar ist.

4. Scheibenbremse nach Anspruch 2, **dadurch gekennzeichnet, dass** die Scheibenbremse (1) eine Hydropumpe (29) aufweist, mit der der Bremskolben (5) druckbeaufschlagbar ist.

5. Scheibenbremse nach Anspruch 1, **dadurch gekennzeichnet, dass** die Scheibenbremse (1) einen Drucksensor (18) für den Bremskolben (5) und einen Drucksensor (17) für den Hilfskolben (8) aufweist.

6. Scheibenbremse nach Anspruch 1, **dadurch gekennzeichnet, dass** der Hilfskolben (8) oder der Bremskolben (5) durch ein Ventil (15) mit einem Hydrospeicher (16) kommunizieren.

7. Scheibenbremse nach Anspruch 1, **dadurch gekennzeichnet, dass** die Scheibenbremse (1) zwei entgegengesetzt verschiebbare Hilfskolben (8) aufweist und dass sich der Reibbremsbelag (3) in Abhängigkeit von einer Drehrichtung der Bremsscheibe (4) an einem der beiden Hilfskolben (8) abstützt.

8. Scheibenbremse nach Anspruch 1, **dadurch gekennzeichnet, dass** der Hilfskolben (8) eine kleinere Kolbenfläche aufweist als der Bremskolben (5).

## Claims

1. Disc brake, having a friction brake lining (3) and having a brake piston (5), by way of which the friction brake lining (3) can be pressed against a brake disc (4), it being possible for the friction brake lining (3) to be displaced transversely and parallel with respect to the brake disc (4), and the said friction brake lining (3) being supported in the circumferential direction on an auxiliary piston (8) which can be displaced parallel to the brake disc (4) and communicates with the brake piston (5), a valve (14; 24; 28) being connected between the auxiliary piston (8) and the brake piston (5), **characterized in that** the brake piston (5) is connected to a brake master cylinder (27), and **in that** the auxiliary piston (8) has a restoring spring (12), the spring force of which is in the order of magnitude of a force, with which the friction brake lining (3) is supported on the auxiliary piston (8) in the case of an actuated disc brake (1).

2. Disc brake according to Claim 1, **characterized in that** the disc brake (1) has a device (15, 16; 29, 30), by way of which the friction brake lining (3) can be placed against the brake disc (4) in order to actuate the disc brake (1).

3. Disc brake according to Claim 1, **characterized in that** the disc brake (1) has an actuator (19), by way of which the friction brake lining (3) can be pressed against the brake disc (4) in order to actuate the disc brake (1).

4. Disc brake according to Claim 2, **characterized in that** the disc brake (1) has a hydraulic pump (29), by way of which the brake piston (5) can be loaded with pressure.

5. Disc brake according to Claim 1, **characterized in that** the disc brake (1) has a pressure sensor (18) for the brake piston (5) and a pressure sensor (17) for the auxiliary piston (8).

6. Disc brake according to Claim 1, **characterized in that** the auxiliary piston (8) or the brake piston (5) communicates with a hydraulic accumulator (16) by way of a valve (15).

7. Disc brake according to Claim 1, **characterized in that** the disc brake (1) has two auxiliary pistons (8) which can be displaced in opposite directions, and **in that** the friction brake lining (3) is supported on one of the two auxiliary pistons (8) depending on a rotational direction of the brake disc (4).

8. Disc brake according to Claim 1, **characterized in that** the auxiliary piston (8) has a smaller piston area than the brake piston (5).

## Revendications

1. Frein à disque, comprenant une garniture de frein à friction (3) et un piston de frein (5), avec lequel la garniture de frein à friction (3) peut être pressée contre un disque de frein (4), la garniture de frein à friction (3) pouvant être déplacée transversalement et parallèlement au disque de frein (4) et s'appuyant dans la direction périphérique contre un piston auxiliaire (8) qui peut être déplacé parallèlement au disque de frein (4) et qui communique avec le piston de frein (5), une soupape (14 ; 24 ; 28) étant interposée entre le piston auxiliaire (8) et le piston de frein (5), **caractérisé en ce que** le piston de frein (5) est raccordé à un cylindre de frein principal (27) et **en ce que** le piston auxiliaire (8) présente un ressort de rappel (12) dont la force de ressort est de l'ordre de grandeur d'une force avec laquelle la garniture de frein à friction (3) s'appuie contre le piston auxiliaire (8) lorsque le frein à disque (1) est actionné.

2. Frein à disque selon la revendication 1, **caractérisé en ce que** le frein à disque (1) présente un dispositif (15, 16 ; 29, 30) avec lequel la garniture de frein à friction (3) peut s'appliquer contre le disque de frein (4) pour actionner le frein à disque (1).

3. Frein à disque selon la revendication 1, **caractérisé en ce que** le frein à disque (1) présente un actionneur (19) avec lequel la garniture de frein à friction (3) peut être pressée contre le disque de frein (4) pour actionner le frein à disque (1).

4. Frein à disque selon la revendication 2, **caractérisé en ce que** le frein à disque (1) présente une pompe hydraulique (29) avec laquelle le piston de frein (5) peut être sollicité en pression.

5. Frein à disque selon la revendication 1, **caractérisé en ce que** le frein à disque (1) présente un capteur de pression (18) pour le piston de frein (5) et un capteur de pression (17) pour le piston auxiliaire (8).

6. Frein à disque selon la revendication 1, **caractérisé en ce que** le piston auxiliaire (8) ou le piston de frein (5) communique par le biais d'une soupape (15) avec un accumulateur hydraulique (16).

7. Frein à disque selon la revendication 1, **caractérisé en ce que** le frein à disque (1) présente deux pistons auxiliaires (8) déplaçables en sens inverse et **en ce que** la garniture de frein à friction (3) s'appuie sur l'un des deux pistons auxiliaires (8) en fonction d'un sens de rotation du disque de frein (4).

8. Frein à disque selon la revendication 1, **caractérisé en ce que** le piston auxiliaire (8) présente une plus petite surface de piston que le piston de frein (5).
